# EUROPEAN PATENT APPLICATION

(11) **EP 4 697 180 A1**
(43) Date of publication of application: **18.02.2026**
(21) Application number: 25190559.2
(22) Date of filing: 18.07.2025
(51) Int. Cl.: G06F 11/3668, G06F 11/3698, G06N 20/00

(54) **ARTIFICIAL INTELLIGENCE SUPPORTED MODEL BASED TEST SCENARIO GENERATION SYSTEM AND METHOD**

(30) Priority: 23.07.2024 TR 2024009529
(71) Applicant: Virgosol Bilisim Ve Yazilim Cozumleri A.S., 34736 Istanbul (TR)
(72) Inventor: EMEKTAR, MIRAC, 34746 ISTANBUL (TR)
(74) Representative: Yamankaradeniz, Kemal

(57) **Abstract**

In software testing processes, it is a system that automatically creates test scenarios (50) using a comprehensive model representing the general system behavior, along with resources such as requirement documents (10) and user stories, and constantly updates the model by analyzing past test results (70), wherein; it comprises the database where all data in the system is kept, the requirement documents (10) which include the functional and non-functional requirements of the software and are the basic inputs (A) of the system, the model creation module (20), which provides the necessary tools to model the expected software behavior from the user perspective, the software behavior model (30), which represents the behavior of the software, the interaction between sub-elements, and the general operating flows, the Al-supported test scenario creation module (40), which automatically generates test scenarios (50) using Al algorithms, using the software behavior model (30) and the requirement documents (10) provided as input (A), the test execution environment (60) where the generated test scenarios (50) are run and the test results (70) are received, the test results (70) obtained from the test execution environment (60), including the success status of the scenarios and error details, the Al-supported analysis and update module (80), which analyzes test results (70), updates and optimizes coefficients between components in the model and provides continuous learning, the updated model (90), which is a more accurate and up-to-date software behavior model, where the relationship coefficients between components are updated by the analysis and update module.

## Description

### Technical Field

The invention relates to a system and method that automatically creates test scenarios through artificial intelligence algorithms using a comprehensive model representing the general system behavior and resources such as analysis and design documents of the relevant system and user stories to be used in software testing processes, and constantly updates the model representing the system behavior by analyzing past test results.

### State of Art

Today, the production of test scenarios in software testing processes is one of the most important elements that directly affect software quality. In the present art, test scenarios are created manually:
Software test scenarios can be produced in infinite numbers, therefore their effective construction is a critical issue for time and resource management. In the current situation, effective test scenario writing is attempted to be managed by experienced personnel. This brings a success rate that depends on the personal emotional state, abilities and experience of the test experts.

Manual Test Scenario Generation: Test engineers create test scenarios manually based on their own experience and knowledge. In this method, test engineers write scenarios by examining the requirement documents and user stories. However, since this approach is at the test engineer's discretion, it often does not cover all possible use cases (edge cases). Therefore, there is a risk that critical errors may be overlooked.

The shortcomings of the present method are:
Lack of Scope: Since manual methods depend on the knowledge and experience of the test engineer, they may fall short in covering possible real-life usage scenarios.
Difficulty of Updating: As software requirements change, updating manually created test scenarios is a time-consuming and error-prone process.
Inefficiency: Manual scenario generation is time-consuming. This reduces the overall efficiency of the testing process and negatively impacts the project timeline.
Inconsistency: It is possible for different test engineers to produce different test scenarios for the same requirements. This can lead to inconsistencies in the testing process and potentially missing important test areas.

### The technical problems arising as a result of these shortcomings are as follows:

Inadequate Test Coverage: Missing critical errors and decreasing software quality.
Waste of Time and Resources: Delay in projects and increased costs due to inefficient testing processes.
Adaptation Difficulty: Inability to quickly adapt to changing requirements and outdated test scenarios.
Scalability Issue: In large and complex systems, manual test scenario generation becomes impractical and difficult to manage.

These problems become more apparent, especially in large-scale and complex software projects, and negatively affect software quality, end-user satisfaction, and the overall success of the software development process.

The summary of the application numbered 2019/21770, which emerged as a result of technical research, is as follows: 'This invention relates to a system developed to identify the most frequently used areas within mobile applications through usage analysis, to analyze user behavior in these areas, to generate software test scenarios using artificial intelligence techniques, to create the test codes to be applied for these scenarios, and to execute the test scenarios using the generated codes.'

As can be seen, the application numbered 2019/21770 relates to the test scenario creation system according to mobile application usage. However, this system produces test scenarios by focusing only on user behavior and most used areas. This approach may not fully cover the core functionality of the software and the interactions between components, and there is a risk of missing rare but critical scenarios. Therefore, it cannot provide a comprehensive solution to the above-mentioned disadvantages and technical problems.

As a result, due to the negativities described above and the inadequacy of existing solutions on the subject, it has become necessary to make a development in the relevant technical field.

### Purpose of the Invention

The invention aims to present a structure with different technical features that bring a new expansion into this field, unlike the structures used in the present art.

The primary purpose of the invention is to present an innovative system that combines a model approach representing the behavior of the software, the interaction between sub-elements, user habits and general operating flows with artificial intelligence in order to solve the problems of test case generation and management in software testing processes. This system reduces the problems caused by manual test scenario generation by test engineers and expands the scope and effectiveness of testing.

The invention aims to present a system and method that can be applied to all software projects, including complex and large-scale software projects, in the field of test scenario generation used in software testing processes.

The solutions offered by the invention and the elements used are as follows:
Comprehensive Software Behavior Model: A detailed model is created that represents the behavior of the software, the interaction between sub-elements, user habits and general operating flows. The operation of this model is based on two basic elements:
a) Knowledge Transfer Mechanism: The model provides a structured framework that enables the systematic transfer of tacit knowledge and experience of in-house experts and test engineers. In this way, critical domain knowledge and test strategies cease to be dependent on individuals and become an institutional asset.
b) Comprehensive Analysis of System Topology: The model maps out the interactions and data flows between components in detail. This approach reveals complex dependencies, implicit workflows, and potential failure points that are difficult to detect with traditional methods.

Multi-Source Data Integration: The system enriches the model by analyzing requirement documents, user stories, and other related documentation. This provides a more comprehensive and holistic approach to creating test scenarios.

Artificial Intelligence-Supported Test Scenario Generation: Using the created model and integrated documents, the system automatically generates test scenarios with the help of artificial intelligence algorithms. This minimizes the time loss and human errors caused by manual scenario writing, while allowing the creation of more comprehensive and diverse test cases.

Dynamic Model Update and Optimization: The coefficients of the connections, which show the degree of relationship and connection of the elements in the created model, are dynamically updated according to the test results using artificial intelligence algorithms. The system constantly improves itself by analyzing the results obtained from each test run.

This solution automates the process of creating and managing test scenarios using artificial intelligence with a model-based feeding method and ensures that they are monitored in a controlled environment. The software behavior model approach and multi-source data integration enable the generation of scenarios covering possible states of the software, while the Al-supported dynamic update feature ensures that these scenarios better reflect real usage conditions and are optimized over time.

This approach reduces the time test engineers spend on manual script writing, reducing the workload on them and allowing them to focus on different areas. In addition, it contributes to improving software quality and increasing customer satisfaction by enabling faster adaptation to rapidly changing requirements and user needs.

A comprehensive model representing the behavior of the software is created on the system which is the subject of the invention. The system uses this model together with resources such as requirement documents and user stories to automatically create test scenarios through artificial intelligence algorithms. It constantly updates the model by analyzing past test results, so the system becomes more effective over time.

This approach expands the scope of testing, enables more effective identification of extreme scenarios, increases the efficiency of testing processes, and minimizes risks and variability caused by human factors. As a result, it significantly reduces the cost and time of the testing process while improving software quality.

The most important innovative aspects of the invention are the provision of a framework that will enable the creation of a model that will represent the behavior of the software, the interaction between sub-elements, user habits and general operating flows, and the creation of test scenarios through artificial intelligence by including other related system documents based on this model. As a result, this system significantly increases the efficiency and effectiveness of software testing processes, minimizes human errors, and increases software quality. This integrated approach creates a paradigm shift in testing processes, providing a more reliable, comprehensive, and adaptive test design methodology.

In order to fulfill the purposes described above, the invention is a system that automatically creates test scenarios using a comprehensive model representing the general system behavior in software testing processes, together with resources such as system requirements documents and user stories, and constantly updates the model representing the system behavior by analyzing past test results, wherein; it comprises:
- database where all data in the system is kept,
- requirement documents, which include the functional and non-functional requirements of the software and are the basic inputs of the system,
- model creation module, which provides the necessary tools to model the expected software behavior from the user perspective,
- software behavior model, which represents the behavior of the software, the interaction between sub-elements and the general operating flows,
- Al-supported test scenario creation module, which automatically generates test scenarios using Al algorithms, using the software behavior model and the requirement documents provided as input,
- test execution environment where the produced test scenarios are run and the test results are obtained,
- test results obtained from the test execution environment, including the success status of the scenarios and error details,
- Al-supported analysis and update module, which analyzes test results, updates and optimizes coefficients between components in the model and provides continuous learning,
- updated model, which is a more accurate and up-to-date software behavior model, where the relationship coefficients between components are updated by the analysis and update module.

The structural and characteristic features of the invention and all its advantages will be understood more clearly thanks to the figures given below and the detailed description written by making references to these figures, and therefore the evaluation needs to be made by taking these figures and detailed description into consideration.

### Figures to Help Understand the Invention

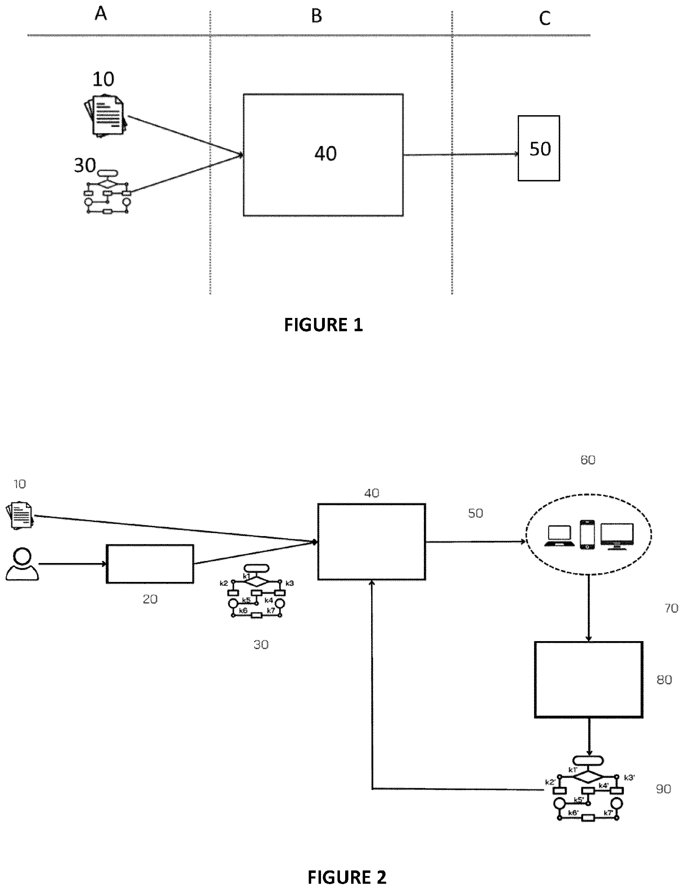

**Figure 1** is a general representation of the system, which is the subject of the invention.
**Figure 2** is a detailed representation of the system, which is the subject of the invention.

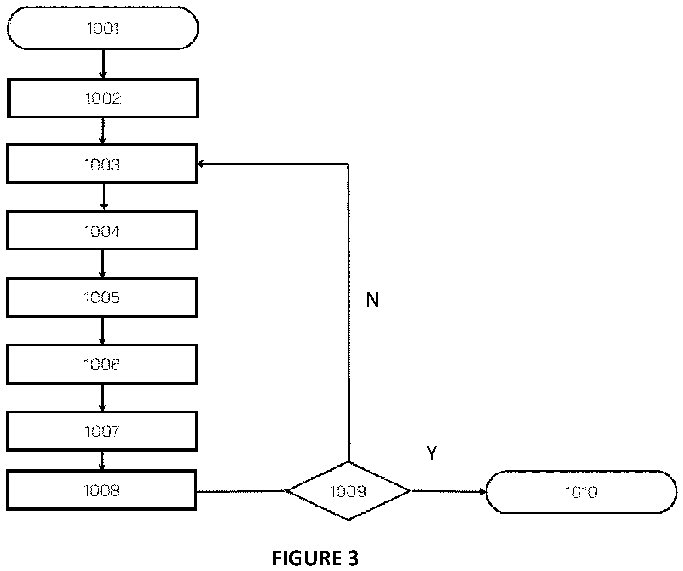

**Figure 3** is a schematic representation of the method, which is the subject of the invention.

The drawings are not necessarily to scale and details not essential to understanding the present invention may be omitted. Furthermore, elements that are at least substantially identical or at least have substantially identical functions are indicated by the same numerals.

### Description of Piece References

10. Requirement Documents
20. Model Creation Module
30. Software Behavior Model
40. Artificial Intelligence Supported Test Scenario Creation Module
50. Test Scenarios
60. Test Execution Environment
70. Test Results
80. Artificial Intelligence Supported Analysis and Update Module
90. Updated Model
A. Input
B. Test Scenario System
C. Output
Y. Yes
N. No
k1, k2, k3, k4, k5, k6, k7 Model connection coefficients
k1', k2', k3', k4', k5', k6', k7' Updated model correlation coefficients
1001. Creating the software behavior model (30) by the user in the model creation module (20),
1002. Automatically creating the test scenarios (50) by the artificial intelligence supported test scenario creation module (40) based on the requirements documents (10) and the created software behavior model (30),
1003. Running the test scenarios (50) in the relevant test execution environment (60) by the user and obtaining the test results (70),
1004. Entering the test results (70) by the user into the artificial intelligence supported analysis and update module (80),
1005. Analyzing the test results (70) by the Al-assisted analysis and update module (80)
1006. Updating the coefficients in the software behavior model (30) by the Al-assisted analysis and update module (80),
1007. Creating the updated model (90),
1008. Automatically creating of test scenarios (50) by the artificial intelligence-supported test scenario creation module (40) based on the requirement documents (10) and the updated software behavior model (30),
1009. Checking whether the project is completed (1009):
1010. Returning to step 1003 and continuing the process if the project is not completed; terminating the process if the project is completed.

### Detailed Description of the Invention

In this detailed description, preferred embodiments of the invention are described only for the purpose of better understanding the subject and in a way that does not form any limiting effect. The invention relates to a system and method that automatically creates test scenarios (50) through artificial intelligence algorithms using a comprehensive model representing the general system behavior together with resources such as analysis and design documents and user stories related to the system to be used in software testing processes, and constantly updates the model representing the system behavior by analyzing past test results (70).

The elements and functions used in the system and method which are the subject of the invention are as follows;
The requirement documents (10) are the documents that contain the functional and non-functional requirements of the software and are one of the basic inputs (A) of the system.

The model creation module (20) is the element that provides the necessary tools to model the expected software behaviors from the user perspective.

The software behavior model (30) is a comprehensive model that represents the behavior of the software, the interactions between sub-elements, and the overall operating flows.

The artificial intelligence-supported test scenario generation module (40) is the module that automatically generates test scenarios (50) with artificial intelligence algorithms, using the software behavior model (30) and the requirement documents (10) provided as input (A).

The test scenarios (50) are the comprehensive and detailed test scenarios produced.

The test execution environment (60) is the environment where the generated test scenarios are run and the test results (70) are received.

The test results (70) are data obtained from the test execution environment (60), containing the success status of the scenarios and error details.

The artificial intelligence-supported analysis and update module (80) is the module that analyzes the test results (70), updates and optimizes the coefficients between the components in the model and provides continuous learning.

The updated model (90) is a more accurate and up-to-date software behavior model (30) in which the relationship coefficients between components are updated by the analysis and update module.

The computer is the device on which the software testing system runs.

The database is the element where all data in the system is kept.

The working principle of the system which is the subject of the invention is as follows;

The said system is designed to automate and optimize software testing processes. The process begins with the user creating the software behavior model (30) in the model creation module (20). This model comprehensively represents the expected behaviors of the software, interactions between sub-elements, user habits, and general operating flows.

Then, using the requirement documents (10) and the created software behavior model (30), the Al-assisted test scenario generation module (40) automatically creates the test scenarios (50). This module generates comprehensive and effective test scenarios (50) using artificial intelligence algorithms.

The user runs the generated test scenarios (50) in the relevant test execution environment (60) and the test results (70) are obtained. This phase is performed similarly to traditional testing methods.

The test results (70) are entered by the user into the artificial intelligence-supported analysis and update module (80). This module analyzes the test results (70) in detail and updates the coefficients in the software behavior model (30). This process allows the model to be continuously improved and become more accurate.

After the analysis and update process, the updated model (90) is created. This new model forms the basis for the next test iteration, and by going back to the beginning of the process, new test scenarios (50) are generated based on the updated model (90) by the artificial intelligence-supported test scenario creation module (40).

This cyclical process continues after each test run and with software revisions throughout the software development lifecycle. With each iteration, the model improves, the test scenarios (50) become more effective, and the overall quality of the software increases. The system provides a more comprehensive, fast, and consistent testing process compared to traditional manual testing methods.

The process steps carried out with the system which is the subject of the invention are as follows;
- Creating the software behavior model (30) by the user in the model creation module (20) (1001)
- Automatically creating the test scenarios (50) by the artificial intelligence supported test scenario creation module (40) based on the requirement documents (10) and the created software behavior model (30) (1002),
- Running the test scenarios (50) in the relevant test execution environment (60) by the user and obtaining the test results (70) (1003),
- Entering the test results (70) by the user into the artificial intelligence supported analysis and update module (80) (1004),
- Analyzing the test results (70) by the artificial intelligence supported analysis and update module (80) (1005),
- Updating the coefficients in the software behavior model (30) by the Al-supported analysis and update module (80)(1006),
- Creating the updated model (90) (1007),
- Automatically creating the test scenarios (50) by the artificial intelligence-supported test scenario creation module (40) based on the requirement documents (10) and the updated software behavior model (90) (1008),
- Checking whether the project is completed (1009):
   ∘ Returning to step 1003 and continuing the process if the project is not completed,
   ∘ Terminating the process if the project is completed (1010).

## Claims

1. A system that automatically creates test scenarios (50) using artificial intelligence algorithms using a comprehensive model representing the general system behavior together with resources such as the system's requirement documents (10) and user stories, and constantly updates the model representing the system behavior by analyzing past test results (70) in software testing processes, **characterized by** comprising:
• a database where all data in the system is stored,
• the requirement documents (10), which comprise the functional and non-functional requirements of the software and are the basic inputs (A) of the system,
• a model creation module (20), which provides the necessary tools to model the expected software behavior from the user perspective,
• a software behavior model (30), which represents the behavior of the software, the interaction between sub-elements and the general operating flows,
• an Al-supported test scenario creation module (40), which automatically generates test scenarios (50) using Al algorithms, using the software behavior model (30) and the requirement documents (10) provided as input (A),
• a test execution environment (60) where the generated test scenarios (50) are run and the test results (70) are received,
• the test results (70) obtained from the test execution environment (60), including the success status of the scenarios and error details,
• an Al-supported analysis and update module (80), which analyzes the test results (70), updates and optimizes the coefficients between the components in the model and provides continuous learning,
• an updated model (90), which is a more accurate and up-to-date software behavior model, where the relationship coefficients between components are updated by the analysis and update module.

2. A method that automatically creates test scenarios (50) using a comprehensive model representing the general system behavior, together with resources such as the system's requirement documents (10) and user stories, and continuously updates the model representing the system behavior by analyzing past test results (70) in software testing processes, **characterized by** comprising the following process steps:
• Creating the software behavior model (30) by the user in the model creation module (20) (1001),
• Automatically creating the test scenarios (50) by the artificial intelligence supported test scenario creation module (40) based on the requirement documents (10) and the created software behavior model (30) (1002),
• Running the test scenarios (50) in the relevant test execution environment (60) by the user and obtaining the test results (70) (1003),
• Entering the test results (70) by the user into the artificial intelligence supported analysis and update module (80) (1004),
• Analyzing the test results (70) by the artificial intelligence supported analysis and update module (80) (1005),
• Updating the coefficients in the software behavior model (30) by the Al-supported analysis and update module (80) (1006),
• Creating the updated model (90) (1007),
• Automatically creating the test scenarios (50) by the artificial intelligence-supported test scenario creation module (40) based on the requirement documents (10) and the updated software behavior model (90) (1008),
• Checking whether the project is completed (1009):
∘ Returning to step 1003 and continuing the process if the project is not completed,
∘ Terminating the process if the project is completed (1010).
